# EUROPEAN PATENT SPECIFICATION

(11) **EP 0 768 229 B1**
(45) Date of publication and mention of the grant of the patent: **07.01.1999**
(21) Application number: 96660070.2
(22) Date of filing: 11.10.1996
(51) Int. Cl.: B62B 3/18

(54) **Rolling storage rack**
Fahrbares Regal
Rayonnage roulant

(30) Priority: 16.10.1995 FI 954921
(43) Date of publication of application: 16.04.1997
(73) Proprietor: Ky K. Hartwall Kb, 01150 Söderkulla (FI)
(72) Inventor: Hartwall, John, 01150 Söderkulla (FI)
(74) Representative: Hovi, Simo

(56) References cited:
- EP-A- 0 106 703
- FR-A- 2 528 784

## Description

The present invention relates to a store-away-type rolling storage rack according to the preamble of claim 1 having sideways opening side walls and upward rotatable bottom for collapsing said storage rack into a store-away position.

Rolling storage racks and transfer carts are used in storage spaces, docking sites, department stores and in transport operations between storage warehouses and stores such as milk transport from a dairy to a store and transport of beverages from a brewery to a store. Frequently, rolling storage racks and transfer carts are also used as sales racks for milk products, for example.

Today, a plurality of different rolling storage rack types described below are used having a construction modified from a single basic type into a variety of designs developed for different applications.

A rigid-frame rolling storage rack comprises a wheeled base frame to which from 2 to 3 walls are attached serving to keep the goods being transferred in the storage rack. The front side of the rack is open. Such racks take equal footprint both empty and filled as they cannot be stacked nestedly.

The open side of the rolling storage rack can be provided with one or more gates. Hingedly mounted to the side wall front edge, such a gate or pair of gates may be rotated 270° sideways, that is, parallel to the side wall against the outer side thereof for the duration of the filling/emptying of the rack. Both rigid-frame and gated racks may also be provided with intermediate shelves, which may be attached fixedly, detachably or hingedly to the rack sides, whereby goods can be loaded on the rack that are too fragile to be stacked in several layers.

Even when empty, such rigid-frame storage racks consume a large footprint in the storage room. To be able to collapse empty racks into a smaller space, nestedly stackable racks have been developed. In this type of rack, the wheels are attached to the lower edges of the vertical walls, and the side walls are hingedly mounted on the rear wall. The bottom of the rack is hingedly mounted at the lower edge of either one side wall or the rear wall, whereby the bottom may be flipped up for store-away. If such a rack is provided with gates and intermediate shelves, the gates must be rotated for store-away of the rack into the open position and against the outer sides of the rack side wall, whereafter the intermediate shelves that are the hingedly mounted on the rack walls can be flipped up in the same fashion as the rack bottom.

The rack bottom may be rotated up into a vertical or almost vertical position and the side walls rotated sideways open, whereby another similarly opened rack can be slided into the first opened rack. This type of rack can thus be stored-away and transferred partially pushed inside each other. This facility offers a store-away arrangement of racks in less space.

In its store-away position, the rack bottom may not necessarily stay reliably in its vertically upward rotated position, unless the bottom is not supported in a proper manner. When the rack is next time taken in use, the rack bottom easily drops onto the floor, thus making the handling of the rack clumsy. Furthermore, the dropping bottom is rather heavy, whereby it can cause damage, even slight bruises when accidentally hitting the user's foot. While the bottom may be locked with the help of latching slots or hooks, such locking means are clumsy to operate and extra locking means increase the price of the rack.

FI Pat. No. 69,024 describes a rolling rack in which the rotation of the rack bottom into its vertical position is guided so that the bottom stays locked into its upper position by means of elements adapted to the rear edge of the rack bottom and the wheel cover of the rack. In this type of rack, in order to prevent the dropping-down of the front end of the rack bottom when the supports of the rack sides are not in their bottom-receiving position, the rear end of the rack bottom is provided with an arm rotating with the rack bottom, said arm having its movement provided with a backing stop attached to the wheel cover so as to stop the downward pivotal movement of the rack bottom into an at least essentially horizontal position. Additionally, the movement of the arm is provided with a stop for keeping the rack bottom in its vertical position, whereby the arm itself is adapted to pass said stop when the rack bottom is rotated up into its vertical position.

In principle, the above-described locking method is functional and easy to use. However, due to the curved shape of the backing stop element adapted on the path of the arm movement and the welded attachment of the stop to the edge of wheel cover, the locking arrangement results in substantial increase of the rack manufacturing costs. The welded attachment must be made by manual methods and the backing stop must be accurately supported for welding into a correct position over the side plate of the wheel cover, thus requiring great carefulness in its attachment and making the operation time-consuming.

It is an object of the present invention to provide a simplified locking mechanism of the rack bottom that is uncomplicated and cost-efficient to manufacture.

The goal of the invention is achieved by forming the hole for the pivotal shaft of the rack bottom and the backing stops that limit the rotational movement of the rack bottom directly into the wheel cover by stamping on the wheel cover blank during its prefabrication stage an oblong hole for said rack bottom pivotal shaft and two appropriately located backing stop lips serving to limit the rotational movement of the rack bottom in a ready-assembled rack.

More specifically, the rolling rack according to the invention is characterized by what is stated in the characterizing part of claim 1.

The invention provides significant benefits.

The most important benefit of the invention is that the locking elements can be advantageously made during the sheet stamping stage of the wheel cover. Stamping and equivalent machining methods are known in the art as extremely cost-efficient techniques, provided that the manufacturing series can be made sufficiently large. Thus, the wheel cover of the rolling rack can be made ready in a single sequence, and no worksteps subsequent to the sheet machining stage are required. After the stamping and folding in a press into required shape of the wheel cover blank, the wheel cover is thus ready for assembly. Besides simpler work flow, also work planning is streamlined, because one workstep is entirely omitted. The pivotal shaft of the rack bottom can be attached permanently to the bottom frame, and the rack bottom can be centered between two wheel covers with the help of centering elements inserted onto the shaft. Resultingly, no joints for shafts are necessary in the wheel cover.

In the following the invention will be examined in greater detail by making reference to the appended drawings in which
Figure 1 illustrates a rolling rack according to the invention;
Figure 2 is an enlarged view of the rack bottom and wheel cover of the rolling rack shown in Fig. 1;

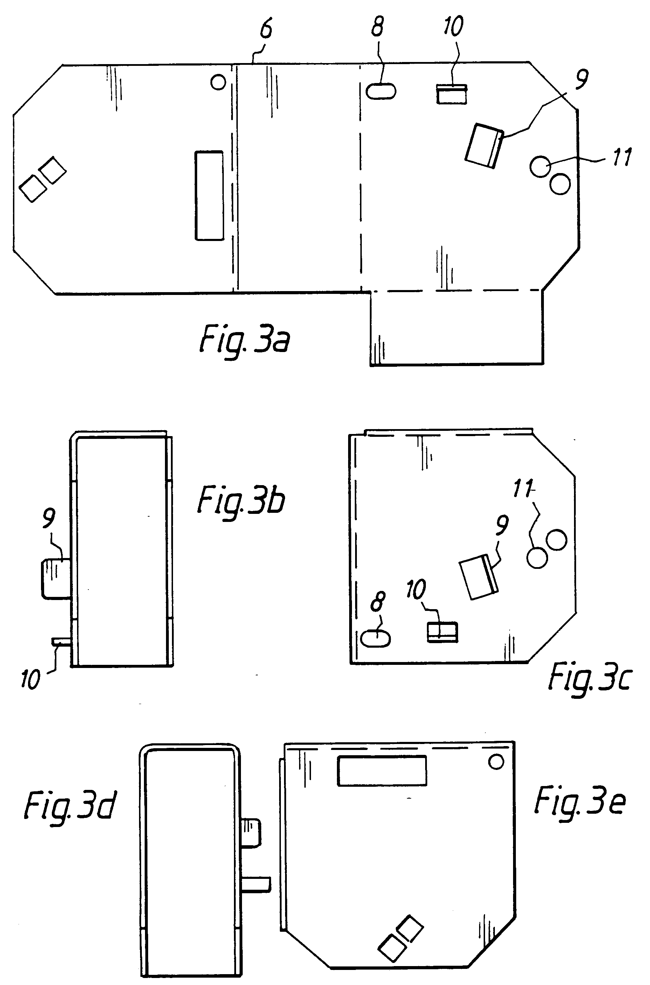

Figure 3a illustrates a blank of the wheel cover;
Figures 3b - 3e illustrate the wheel cover fabricated from the blank shown in Fig. 3a.

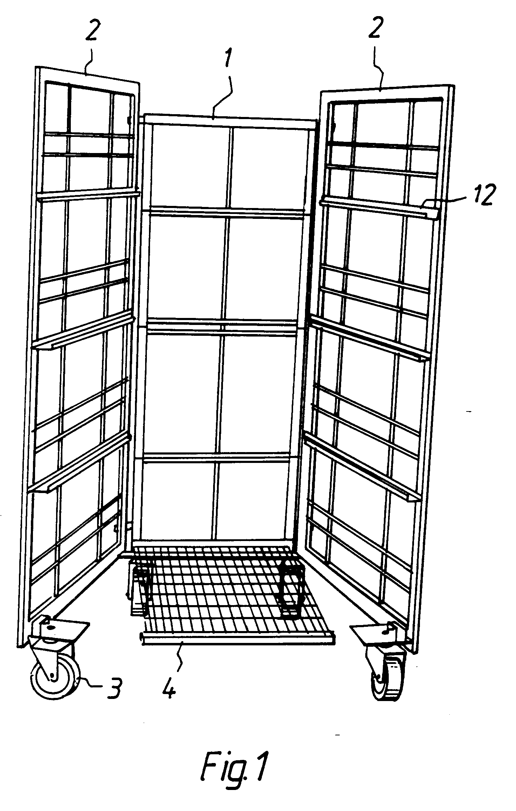

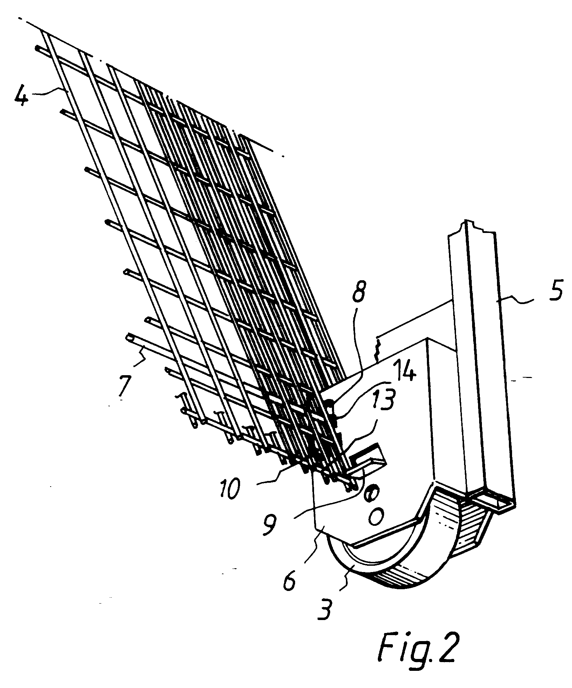

Referring to Fig. 1, the rolling rack shown therein comprises opening side walls 2 and upward rotatable rack bottom 4. The side walls 2 as the bottom 4 are hingedly mounted on the rear wall 1. In the exemplifying embodiment of the rolling rack, the side walls 2 are provided with strips 12 for the support of shelves or bins containing the goods loaded into the rack, and each corner of the rack bottom frame is equipped with a wheel 3 to facilitate the transfer of the rolling rack. In Fig. 2, the rack bottom 4 is shown rotated into its vertical storage position. The bottom 4 is hingedly mounted by means of a shaft 7 on the wheel cover 6 which in turn is attached to a vertical tube 5 of the frame of the rear wall 1. The length of the shaft is dimensioned so that by pushing the bottom 4 toward either of the wheel covers 6, the opposite end of the shaft can be negotiated out from its oblong bearing hole. During the assembly of the bottom, one end of the shaft is first inserted into the oblong hole 8 of the wheel cover 6, after which the other end may be negotiated into the oblong hole 8 of the opposite side wheel cover. As both ends of the shaft have been located in their respective holes, onto free shaft sections between the frame edge of the rack bottom 4 and the side of the wheel cover 6 are pushed C-shaped centering pieces that prevent the shaft 7 from slipping off from the oblong holes 8. Instead of such centering pieces sideways insertable onto the shaft 7, an alternative arrangement is to use resilient centering bushings made of, e.g., rubber that are slipped over the shaft prior to its mounting on the bottom frame, whereby the bushings are appropriately compressed during the insertion of the shaft ends into the oblong holes 8.

The hinging and locking means of the rack bottom 4 comprise an oblong hole 8 made to the internal side wall, at the upper front corner, of the wheel cover 6, which is mounted inside the rack base frame, and two locking stop lips 9 and 10. The longitudinal axis of the oblong hole 8 is aligned approximately vertical and the first locking stop lip 10 is aligned approximately at the front edge of the oblong hole. The second locking stop lip 9 is placed slightly lower than the first lip 10 and its distance from the oblong hole 8 is dimensioned so that the distance of the lip 9 from the lower edge of the oblong hole 8 is smaller than the distance of the shaft 7 of the rack bottom 4 from the rear edge 13 of the rack bottom. The distance of the upper edge of the oblong hole 8 from the second lip 9 is dimensioned so that the distance of the shaft 7 from the rear edge 13 of the rack bottom is smaller. By virtue of this arrangement, the bottom 4 can be locked easily and quickly into its upper, vertical position. To store away the rolling rack, the side walls 2 of the rack are rotated open and the rack bottom 4 is rotated up. When lifting up the bottom 4, it must be hand-supported so that the shaft 7 is pulled abutting the upper edge of the oblong hole 8, whereby the rear edge 13 of the bottom 4 can be negotiated past the second stop lip 9. Further rotation of the bottom 4 is limited by the first stop lip 10, against which the bottom 4 hits at the end of its rotation upward. Now, the bottom 4 may be lowered vertically so that the shaft 7 meets the lower edge of the oblong hole, whereby the rear edge 13 of the bottom remains below the second stop lip 9 that prevents the bottom 4 from dropping back into its horizontal position. Conversely, to lower the bottom 4 into its horizontal service position, the bottom is elevated slightly to negotiate its rear edge 13 past the second stop lip 9.

The wheel cover 6 is made by stamping sheet steel into a blank that is subsequently pressed into a cover. During the stamping step, the required holes and locking stop lips are punched into the cover 6. Besides said oblong hole 8 and said stop lips 9, 10, holes 11 for wheel shafts are punched into the cover 6. The stop lips 9, 10 are folded upward from the planar blank during its punching step, thus making the stop lips ready for use after punching, whereby any other worksteps for fabricating the locking means of the rack bottom become redundant. After the blank is punched, the blank is pressed into the final form of the wheel cover thus completing the manufacturing step of the wheel cover. This method of manufacturing the wheel cover eliminates a number of worksteps in comparison to prior-art designs, thus making the manufacture of the wheel cover faster and more economical.

In addition to those described above, the present invention may have alternative embodiments. Obviously, the invention may be adapted to all such rolling racks that need an upward rotatable bottom. Instead of an oblong hole, a sufficiently large-diameter hole of circular or other shape may be contemplated provided that the pivotal shaft of the rack bottom can make a lateral movement of sufficient amplitude therein. However, the rack bottom can move also laterally, which makes its movements uncontrolled and the use of the rolling rack less comfortable. While the wheel cover is advantageously made by pressing in the above-described manner from punched blanks, other methods are possible if so desired. For instance, the cover may be made by welding from a number of punched blanks. However, this approach is costlier than machining in a press, making this technique attractive only for a small number of wheel covers with nonstandard dimensions. Instead of a long pivotal shaft of the rack bottom extending over the entire width of the rack, a pair of short stud shafts may be used. Obviously, the stop lips are necessary in one wheel cover only. While the positions of the lips and the oblong hole may be varied as desired, the first lip should preferably be located in the vertical direction at the hole and the second lip at such a distance from the first lip that the edge of the bottom frame will unobstructedly slip between the lips, yet allowing the second stop lip to support the rack bottom in a sufficiently vertical position. The rack bottom may also be unsymmetrical with such a shape that the bottom with its shaft(s) may be located in the holes of the wheel covers using only one centering piece.

## Claims

1. A rolling rack comprising at least a rear wall (1), hingedly on the rear wall (1) mounted opening side walls (2), a rack bottom (4) hingedly mounted on the frame of said rolling rack by means of at least one pivotal shaft (7), said bottom being upward rotatable into a store-away position, and said shaft being located at a distance from the rear edge (13) of said rack bottom (4), further comprising wheels (3) adapted into wheel covers (6) placed to the corners of the rolling rack, further comprising means for hinging said rack bottom (4) and locking the same into a store-away position, said means being made to at least one wheel cover side plate facing the interior of the rack base, characterized by said means comprising
- a hole (8) into which the pivotal shaft (7) of the rack bottom is adapted and which hole is dimensioned so as to permit vertical movement of the shaft (7) in the hole (8),
- a first locking stop lip (10) located in the vertical direction approximately at said hole (8) and made by folding the lip outward from the side plate material of the wheel cover (6), and
- a second locking stop lip (9) which is located at a distance from the first locking stop lip (10) in the direction of the rear wall (1) of the rack and its distance from the hole (8) being dimensioned so that, when said pivotal shaft (7) of the rack bottom is resting on the lower edge of the hole (8), the rear edge (13) of the rack bottom reaches past said second locking stop lip, and when said shaft (7) is abutting the upper edge of the hole, the rear edge of the rack bottom (4) can be negotiated past said second stop lip (9), and which second locking stop lip is made by folding a lip outward from the material of the wheel cover side plate.

2. A rolling rack as defined in claim 1, **characterized** in that said hole (8) is an oblong hole having its longitudinal axis aligned vertical.

3. A rolling rack as defined in claim 1 or 2, **characterized** in that said wheel cover (6) is comprised of a single piece made from a single stamped sheet metal blank by folding in a press.

4. A rolling rack as defined in any of foregoing claims, **characterized** in that said pivotal shaft (7) of said rack bottom (4) is permanently fixed to said bottom (4) and that the length of said shaft is dimensioned so that by pushing the side edge of said bottom (4) toward either of the opposed wheel covers, the end of the shaft can be negotiated out from the oblong hole (8) of the opposed wheel cover (6), and that onto said pivotal shaft (7) attached to said bottom (4) mounted in said rolling rack frame is adapted at least one centering piece (14) onto the free shaft section between the frame edge of the rack bottom (4) and the side of the wheel cover (6).

## Patentansprüche

1. Fahrbares Regal, umfassend mindestens eine Hinterwand (1), mit Scharnieren an die Hinterwand (1) montierte, sich öffnende Seitenwände (2), ein mittels mindestens einer Drehachse (7) mit Scharnieren an den Rahmen des fahrbaren Regals montierter Regalboden (4), der in eine Lagerungsposition nach oben geschwenkt werden kann, und wobei die Achse in einem Abstand von der hinteren Kante (13) des Regalbodens (4) angeordnet ist, weiter umfassend in Radkapseln (6) in den Ecken des fahrbaren Regals angeordnete Räder (3), weiter umfassend Organe zur Scharnierbefestigung des Regalbodens (4) und Sperrung desselben in einer Lagerungsposition, welche Organe in mindestens einer Seitenplatte einer Radkapsel, die gegen die Innenseite der Basis des Regals gerichtet ist, ausgebildet sind, dadurch **gekennzeichnet,** daß die Organe umfassen:
- eine Öffnung (8), in der die Drehachse (7) des Regalbodens angeordnet ist und die so dimensioniert ist, daß eine vertikale Bewegung der Achse (7) in der Öffnung (8) ermöglicht wird,
- eine erste Sperrstopplippe (10), die in Vertikalrichtung ungefähr an der Öffnung (8) angeordnet und durch Nach-Außen-Falten der Lippe von dem Seitenplattenmaterial der Radkapsel (6) geformt ist, und
- eine zweite Sperrstopplippe (9), die in einem Abstand von der ersten Sperrstopplippe (10) in Richtung der Hinterwand (1) des Regals angeordnet ist und deren Abstand von der Öffnung (8) so dimensioniert ist, daß, wenn die Drehachse (7) des Regalbodens auf der niederen Kante der Öffnung (8) liegt, sich die hintere Kante (13) des Regalbodens bis hinter die zweite Sperrstopplippe erstreckt, und wenn die Achse (7) auf die obere Kante der Öffnung stößt, die hintere Kante des Regalbodens (4) die zweite Sperrstopplippe (9) passieren kann, welche zweite Sperrstopplippe durch Nach-Außen-Falten des Seitenplattenmaterials der Radkapsel gebildet ist.

2. Fahrbares Regal gemäß Anspruch 1, dadurch **gekennzeichnet,** daß die Öffnung (8) eine ovale Öffnung mit einer vertikal gerichteten Längsachse ist.

3. Fahrbares Regal gemäß Anspruch 1 oder 2, dadurch **gekennzeichnet,** daß die Radkapsel (6) aus einem Stück besteht, das aus einem einzigen gestempelten Metallblattstoff durch Biegen in einer Presse geformt ist.

4. Fahrbares Regal gemäß einem der vorstehenden Ansprüche, dadurch **gekennzeichnet,** daß die Drehachse (7) des Regalbodens (4) fest an dem Boden (4) befestigt ist und daß die Länge der Achse so dimensioniert ist, daß das Ende der Achse aus der ovalen Öffnung (8) der gegenüberliegenden Radkapsel (6) herausgehoben werden kann, wenn die Seitenkante des Bodens (4) gegen eine der gegenüberliegenden Radkapseln gedrückt wird, und dadurch, daß auf der an dem Boden (4), der im Rahmen des fahrbaren Regals montiert ist, befestigten Drehachse (7) mindestens ein Zentrierstück (14) an dem freien Achsenteil zwischen der Rahmenkante des Regalbodens (4) und der Seite der Radkapsel (6) angeordnet ist.

## Revendications

1. Etagère roulante comprenant au moins une paroi arrière (1), des parois latérales d'ouverture (2) montées d'une manière articulée sur la paroi arrière (1), une partie inférieure (4) d'étagère montée de façon articulée sur le cadre de ladite étagère roulante à l'aide d'au moins un arbre de pivotement (7), ladite partie inférieure pouvant tourner vers le haut pour venir dans une position de rangement, et ledit arbre étant situé à une distance du bord arrière (13) de ladite partie inférieure ( 4 ) de l'étagère, et comprenant en outre des roues (3) adaptées dans des capots de roues (6) disposés aux coins des étagères roulantes, comportant en outre des moyens pour articuler ladite partie inférieure (4) de l'étagère et pour bloquer cette partie inférieure dans une position de rangement, lesdits moyens étant formés sur au moins une plaque latérale de capot de roue, tournée vers l'intérieur de la base de l'étagère, caractérisée en ce que lesdits moyens comprennent :
- un trou (8) dans lequel l'arbre pivotant (7) de la partie inférieure de l'étagère est adapté et qui est dimensionné de manière à permettre un déplacement vertical de l'arbre (7) dans le trou (8),
- une première lèvre d'arrêt de blocage (10) située dans la direction verticale approximativement au niveau dudit trou (8) et formée par repliage de la lèvre vers l'extérieur à partir du matériau de la plaque latérale du capot de roue (6), et
- une seconde lèvre d'arrêt de blocage (9), qui est située à une distance de la première lèvre d'arrêt de blocage (10) en direction de la paroi arrière (1) de l'étagère, et sa distance par rapport au trou (8) étant dimensionnée de telle sorte que, lorsque ledit arbre pivotant (7) de la partie inférieure de l'étagère est en appui sur le bord inférieur du trou (8), le bord arrière (13) de la partie inférieure de l'étagère dépasse ladite seconde lèvre d'arrêt de blocage, et lorsque ledit arbre (7) est en butée entre le bord supérieur du trou, le bord arrière de la partie inférieure (4) de l'étagère peut franchir ladite seconde lèvre d'arrêt (9), laquelle seconde lèvre d'arrêt de blocage est réalisée par repliage d'une lèvre vers l'extérieur à partir du matériau de la plaque latérale du capot de roue.

2. Etagère roulante selon la revendication 1, caractérisée en ce que ledit trou (8) est un trou allongé dont l'axe longitudinal est aligné verticalement.

3. Etagère roulante selon la revendication 1 ou 2, caractérisée en ce que ledit capot de roue (6) est constituée d'une seule pièce formée d'une seule ébauche de feuille métallique estampée, par pliage dans une presse.

4. Etagère roulante selon l'une quelconque des revendications précédentes, caractérisée en ce que ledit arbre de pivotement (7) de ladite partie inférieure (4) de l'étagère est fixé à demeure à ladite partie inférieure (4) et que la longueur dudit arbre est dimensionnée de telle sorte qu'en repoussant le bord latéral de ladite partie inférieure (4) vers l'un ou l'autre des capots de roue opposés, l'extrémité de l'arbre peut ressortir du trou allongé (8) du capot de roue opposé (6) et que sur ledit arbre pivotant (7) fixé à ladite partie inférieure (4) montée dans ledit cadre de l'étagère roulante, au moins une pièce de centrage (14) est adaptée sur la section libre de l'arbre entre le bord du cadre de la partie inférieure (4) de l'étagère et le côté du capot de roue (6).
